# EUROPEAN PATENT APPLICATION

(11) **EP 2 661 147 A1**
(43) Date of publication of application: **06.11.2013**
(21) Application number: 11854236.4
(22) Date of filing: 15.12.2011
(51) Int. Cl.: H04W 88/08

(54) **METHOD AND APPARATUS FOR DETERMINING HARQ MODE**

(30) Priority: 29.12.2010 CN 201010612433
(71) Applicant: Datang Mobile Communications Equipment Co., Ltd., Beijing 100083 (CN)
(72) Inventor: XU, Mingyu, Beijing 100083 (CN); XU, Hao, Beijing 100083 (CN)
(74) Representative: Thoma, Michael
(86) International application number: PCT/CN2011/084052
(87) International publication number: WO 2012/089034

(57) **Abstract**

The invention discloses a method for determining an HARQ mode so as to facilitate the use of the same HARQ modes at the network side and the UE side. The method includes: transmitting a reconfiguration message to instruct a UE to be reconfigured as a TTI bundling HARQ mode; detecting activation, upon reception of a feedback of the UE for the reconfiguration message, to determine whether a TTI bundling mechanism is validated at the UE side; and determining from a detection result an HARQ mode adopted by the UE. The invention further discloses an apparatus for performing the method.

## Description

This application claims the benefit of Chinese Patent Application No. 201010612433.4, filed with the Chinese Patent Office on December 29, 2010 and entitled "Method and apparatus for determining HARQ mode", which is hereby incorporated by reference in its entirety.

### Field of the Invention

The present invention relates to the field of communications and particularly to a method and apparatus for determining HARQ mode.

### Background of the Invention

In a Long Term Evolution (LTE) system, a Hybrid Automatic Repeat Request (HARQ) mode is typically used in order to improve the performance of the system in a coverage limited scenario. However a Transmission Time Interval (TTI) bundling mechanism is introduced in the LTE Release 8 (R8) standard in view of a delay increased due to HARQ retransmission. The TTI bundling mechanism takes advantage of non-adaptive automatic retransmission, that is, different redundant versions of a transport block are transmitted in consecutive TTIs and only an ACK (positive acknowledgement)/NACK (negative acknowledgement) is fed back for the redundant version the last to transmit to thereby overcome the drawback of HARQ retransmission while improving an uplink coverage effect due to energy accumulation in the consecutive TTIs.

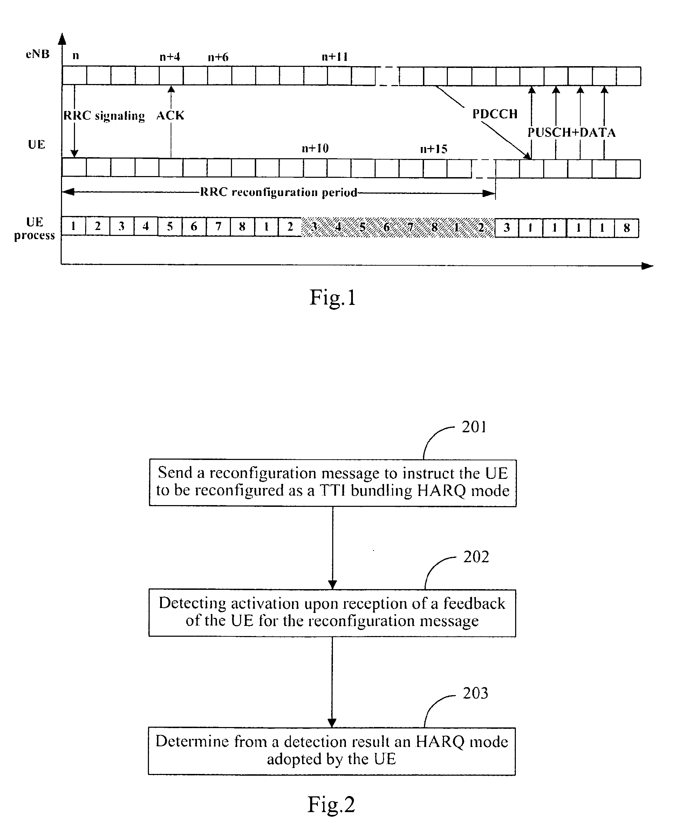

In the prior art, a NodeB sends scheduling signaling to a User Equipment (UE) upon decision on the use of a TTI bundling HARQ mode. The NodeB and the UE adopt a normal HARQ retransmission mode before the NodeB sends a reconfiguration message. The NodeB and the UE adopt the TTI bundling HARQ mode after the UE receives the reconfiguration message and the TTI bundling HARQ mode is validated. Since it takes a period of time for the RRC layer at the UE side to demodulate the reconfiguration message after reception of the same, that is, it takes a period of time of approximately 10ms to 15ms for RRC signaling to be validated, where a specific value of the period of time depends on the performance of the UE, and it takes a period of time of tens of milliseconds (typically approximately 80ms) to have RRC reconfiguration done, then there is a problem of disparate understanding between the NodeB and the UE side after the UE receives the reconfiguration message and before the TTI bundling HARQ mode is validated, that is, the NodeB and the UE may adopt different retransmission modes. A temporal range as illustrated in the shaded zone in Fig.1 represents a phase with disparate understanding between the NodeB and the UE side.

If the NodeB proceeds in a normal HARQ procedure and TTI bundling has been validated by the UE, then the UE will proceed in a TTI bundling HARQ procedure by transmitting PUSCH data in four consecutive sub-frames, thus resulting in resource confliction with a service scheduled at the same locations in the frequency domain of the last three sub-frames. If the NodeB proceeds in a TTI bundling HARQ procedure and the TTI bundling is not validated by the UE, then the UE will proceed in a normal HARQ procedure by transmitting in only one sub-frame, thus resulting in a waste of resources at the same locations in the frequency domain of the last three sub-frames.

It is thus highly desirable to address a problem arising from different retransmission modes possibly used by the NodeB and the UE during a period of time between reception of the reconfiguration message by the UE and validation of the TTI bundling HARQ mode by the UE.

### Summary of the Invention

Embodiments of the invention provide a method and apparatus for determining an HARQ mode so as to facilitate the use of the same HARQ mode at the network side and the UE side.

A method for determining an HARQ mode includes:
transmitting a reconfiguration message to instruct a UE to be reconfigured as a TTI bundling HARQ mode;
detecting activation, upon reception of a feedback of the UE for the reconfiguration message, to determine whether a TTI bundling mechanism is validated at the UE side; and
determining from a detection result an HARQ mode adopted by the UE.

An apparatus for determining an HARQ mode includes:
an interface module configured to transmit a reconfiguration message to instruct a UE to be reconfigured as a TTI bundling HARQ mode;
a detection module configured to detect activation, upon reception of a feedback of the UE for the reconfiguration message, to determine whether a TTI bundling mechanism is validated at the UE side; and
a retransmission mode module configured to determine from a detection result an HARQ mode adopted by the UE.

In the embodiments of the invention, whether a TTI bundling mechanism is validated at the UE side, that is, whether a TTI bundling HARQ mode has been adopted by the UE, is detected upon reception of a feedback from a UE for a reconfiguration message, and if so, then it is determined that the TTI bundling HARQ mode is adopted by the UE; otherwise, it is determined that a normal HARQ mode is adopted by the UE. Determination of the HARQ mode adopted by the UE facilitates the use of the same HARQ mode at the network side as the UE to thereby address a problem arising from different retransmission modes possibly used at the network side and the UE.

### Brief Description of the Drawings

Fig.1 is a schematic diagram of a signaling handling period of time in the prior art;

Fig.2 is a general flow chart of a method for determining an HARQ mode in an embodiment of the invention;

Fig.3 is a detailed flow chart of a method for determining an HARQ mode in an embodiment of the invention;

Fig.4A is a schematic structural diagram of a message in an embodiment of the invention;

Fig.4B is a schematic diagram of a signaling handling period of time in an embodiment of the invention;

Fig.5 is a flow chart of a processing method including subsequent handling process after detecting that a TTI bundling mechanism is not activated by a UE in an embodiment of the invention;

Fig.6 is a general structural diagram of an apparatus in an embodiment of the invention; and

Fig.7 is a detailed structural diagram of an apparatus in an embodiment of the invention.

### Detailed Description of the Embodiments

In embodiments of the invention, whether a TTI bundling mechanism is validated at the UE side, that is, whether a TTI bundling HARQ mode has been adopted by the UE, is detected upon reception of a feedback from a UE for a reconfiguration message, and if so, then it is determined that the TTI bundling HARQ mode is adopted by the UE; otherwise, it is determined that a normal HARQ mode is adopted by the UE. Determination of the HARQ mode adopted by the UE facilitates the use of the same HARQ mode at the network side as the UE to thereby address a problem arising from different retransmission modes possibly used at the network side and the UE.

Referring to Fig.2, a general flow of a method for determining an HARQ mode in this embodiment is as follows:

The step 201 is to send a reconfiguration message to instruct the UE to be reconfigured as a TTI bundling HARQ mode.

The step 202 is to detect activation, upon reception of a feedback of the UE for the reconfiguration message, to determine whether a TTI bundling mechanism is validated at the UE side.

The step 203 is to determine from a detection result an HARQ mode adopted by the UE.

The implementation process of determining an HARQ mode has been outlined above and will be introduced below in details in an embodiment.

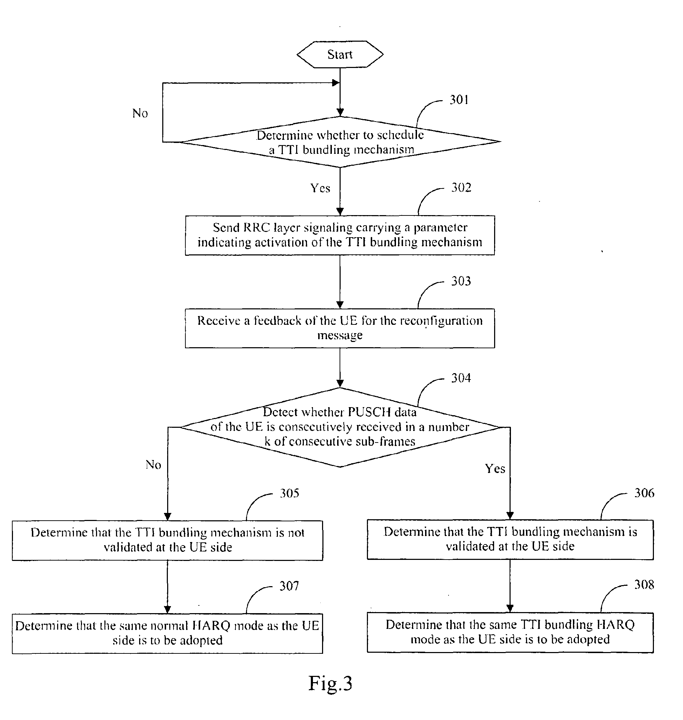

Referring to Fig.3, a detailed flow of a method for determining an HARQ mode in this embodiment is as follows:

The step 301 is to determine whether to schedule a TTI bundling mechanism, and if so, then the flow proceeds to the step 302; otherwise, this step is repeated.

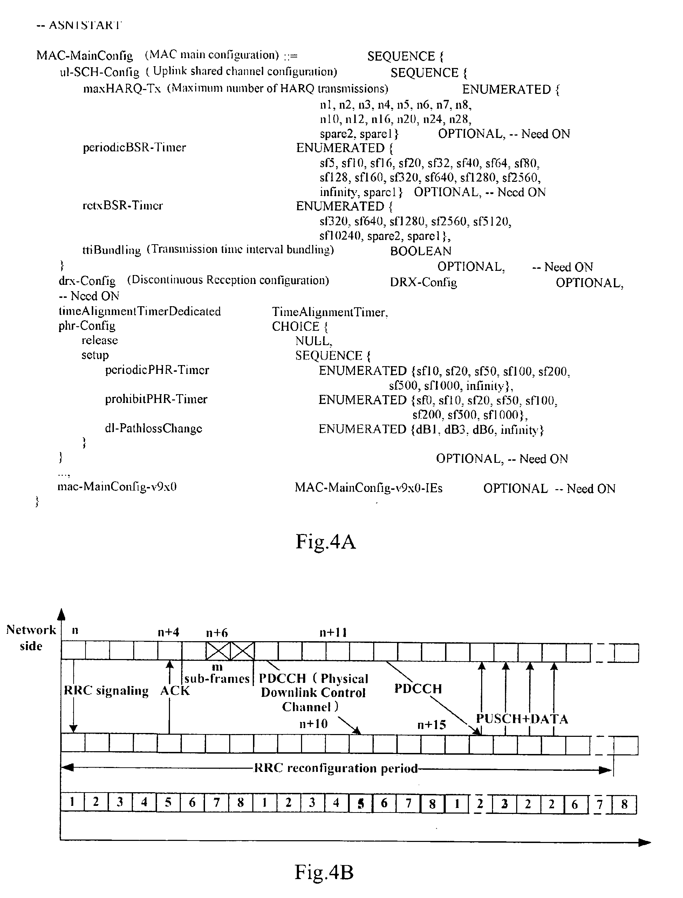

The step 302 is to send Radio Resource Control (RRC) layer signaling carrying a parameter indicating activation of the TTI bundling mechanism. The signaling is a reconfiguration message, which can particularly be RRC Connection Setup, RRC Connection Reestablishment or RRC Connection Reconfiguration or other messages. A structure example of the message can be as illustrated in Fig.4A where the parameter ttiBundling indicates whether a TTI bundling function is required to be enabled, that is, whether the TTI bundling mechanism is required to be activated, with TRUE indicating activation and FALSE indicating deactivation.

The step 303 is to receive a feedback of the UE for the reconfiguration message.

The step 304 is to detect whether PUSCH data of the UE is consecutively received in a number k of consecutive sub-frames, and if PUSCH data of the UE is not consecutively received, then the flow proceeds to the step 305; otherwise, the flow proceeds to the step 306, where k is a preset number of sub-frame, preferably k=4.

The step 305 is to determine that the TTI bundling mechanism is not validated at the UE side. This step equivalently determines that a normal HARQ mode is adopted at the UE side. The flow proceeds to the step 307.

The step 306 is to determine that the TTI bundling mechanism is validated at the UE side. This step equivalently determines that a TTI bundling HARQ mode is adopted at the UE side. The flow proceeds to the step 308.

The step 307 is to determine that the same normal HARQ mode as the UE side is to be adopted.

The step 308 is to determine that the same TTI bundling HARQ mode as the UE side is to be adopted.

In the step 301, whether to schedule the TTI bundling mechanism is determined at least against one of the following conditions:

It is determined whether a channel quality of the UE satisfies a preset channel condition, and it is determined that the channel quality is poor and the TTI bundling mechanism is required to be scheduled when the channel condition is not satisfied, that is, it is determined that the channel quality of the UE is poor and the TTI bundling mechanism is required to be scheduled when the channel quality does not satisfy the preset channel condition; and

It is determined whether a service type carried by the UE belongs to preset low-delay service types, and it is determined that the TTI bundling mechanism is required to be scheduled when the service type belongs to the preset low-delay service types, that is, it is determined that the TTI bundling mechanism is required to be scheduled when the service type carried by the UE belongs to the preset low-delay service types.

Particularly in this embodiment, it is determined against the preset channel condition whether the channel quality is good or poor, and numerous channel conditions are possible, including for example, any one or combination of the following conditions: 1. the channel quality is determined from the location of the UE, where it is determined that the channel quality is poor and the TTI bundling mechanism is required to be scheduled if the UE is located at a preset cell edge; and 2. the channel quality is determined from a cell coverage condition. For example, the TTI bundling mechanism is enabled when a Signal to Noise Ratio (SNR) value at a specific Block Error Ratio (BLER) is above the value at 5% (this value varies with a varying area coverage probability, here an area coverage probability of 95%) of a Cumulative Distribution Function (CDF) curve of a Carrier to Interference Ratio (CIR) even if data is transmitted for a number of times at a low Modulation and Coding Scheme (MCS) level, where 5% is a preset threshold, and this value may vary with a varying area coverage probability. If the SINR value is above the value at 5% of the CDF curve, then it indicates an area coverage probability below 95%, which means limited coverage. Alternatively when the UE bears a service with a very high requirement on a delay, the TTI bundling mechanism can be enabled to thereby lower an RRT delay and an overtime packet loss ratio.

As to the steps 302 to 304 and taking Fig.1 as an example, the reconfiguration message is sent from the network side in the sub-frame n. The UE parses the reconfiguration message in the sub-frames n+1 to n+3. The network side receives a feedback acknowledge message (ACK) of the UE in the sub-frame n+4 and parses the acknowledgement message in the sub-frames n+4 to n+7. The network side detects consecutively received Physical Uplink Link Shared Channel (PUSCH) data of the UE starting from the sub-frame n+8 and schedules according to a TTI bundling HARQ procedure.

In view of that it takes a period of time for the UE to be RRC reconfigured after receiving and parsing the reconfiguration message, the UE still adopts the normal HARQ mode in this period of time. In order to avoid confliction with the UE in the normal HARQ mode, activation is detected after waiting for a number m of sub-frames after the feedback of the UE for the reconfiguration message is received, where m is a preset number of sub-frames. The value of m can be determined by a processing capability of the NodeB, preferably m=3. Reference could be made to the schematic diagram illustrated in Fig.4B.

Furthermore after the step 307, that is, after it is determined that the same normal HARQ mode as the UE side is to be adopted, the UE may have been reconfigured to adopt the TTI bundling HARQ mode, and at this time it is necessary for the network side to be also configured as the TTI bundling HARQ mode. Alternatively the UE may fail to parse the reconfiguration message or fail to accomplish a reconfiguration procedure, and at this time it is necessary for the network side to retransmit a reconfiguration message to instruct the UE to adopt the TTI bundling HARQ mode. This process will be introduced below in details in an embodiment.

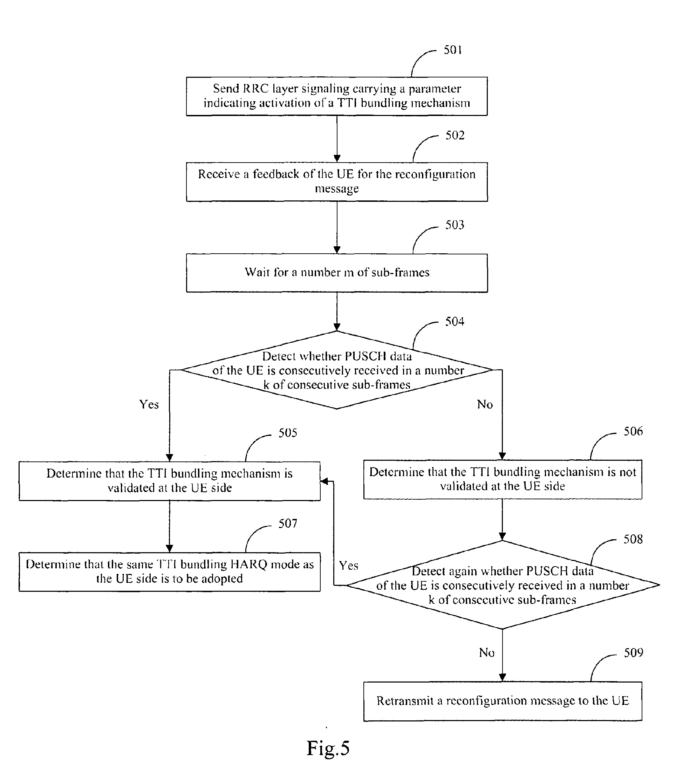

Referring to Fig.5, a flow of a method for subsequent handling after detecting that the TTI bundling mechanism is not activated by a UE in this embodiment is as follows:

The step 501 is to send RRC layer signaling carrying a parameter indicating activation of a TTI bundling mechanism.

The step 502 is to receive a feedback of the UE for the reconfiguration message.

The step 503 is to wait for a number m of sub-frames.

The step 504 is to detect whether PUSCH data of the UE is consecutively received in a number k of consecutive sub-frames, and if PUSCH data of the UE is not consecutively received, then the flow proceeds to the step 506; otherwise, the flow proceeds to the step 505.

The step 505 is to determine that the TTI bundling mechanism is validated at the UE side. This step equivalently determines that a TTI bundling HARQ mode is adopted at the UE side. The flow proceeds to the step 507.

The step 506 is to determine that the TTI bundling mechanism is not validated at the UE side. This step equivalently determines that a normal HARQ mode is adopted at the UE side. The flow proceeds to the step 508.

The step 507 is to determine that the same TTI bundling HARQ mode as the UE side is to be adopted.

The step 508 is to detect again whether PUSCH data of the UE is consecutively received in a number k of consecutive sub-frames, and if PUSCH data of the UE is not consecutively received, then the flow proceeds to the step 509; otherwise, the flow proceeds to the step 505. The length of the detection period of time at this time may not be a number k of consecutive sub-frames although the number k of sub-frames is taken as an example in this embodiment.

The step 509 is to retransmit a reconfiguration message to the UE.

Furthermore after the TTI bundling scheduling mechanism is determined, it is necessary for the network side to determine specific Physical Resource Block (PRB) resource allocation information, e.g., to determine a Transport Block (TB) size. As specified in the LTE standard, the TB size is determined by referring to a table defined in the standard as per the number of allocated PRBs and a current MCS level of the UE. Thus the TB size will be determined by firstly determining the current MCS level of the UE and the number of PRB resources allocated for the UE.

Before the MCS level and the number of PRB resources are determined, the need of a PUSCH resource, i.e., of the TB size, will be further determined from the amount of data carried in each transmission.

Then supported MCS levels are determined from a channel transmission condition of the UE and modulation levels specified in the protocol, for example, *Qₘ*=2, that is, QPSK is adopted, in other words, an MCS level corresponding to the QPSK scheme is determined. For the uplink, the network side measures and revises Channel Quality Information (CQI) of a Sounding Reference Signal (SRS) sent from the UE and determines, from the measured and revised CQI, MCS levels that can currently be supported by the UE. For the downlink, the network side revises CQI information reported from the UE against a historical data transmission condition of the UE and determines, from the revised CQI, currently supported MCS levels.

And the number of PRBs needed for the UE in scheduling is determined from the demand of the TB size and the MCS levels currently supported by the UE.

In view of that the size of allocated resources must be strictly controlled to be limited to 3 PRBs or below as specified in the protocol as well as the modulation level *Qₘ*=2, correspondence relationships of resource options in dynamic scheduling and VOIP semi-persistent scheduling are as depicted in Table 1 and Table 2.

**Table 1. AMR 12.2kbit/s VOIP UL semi-persistent resource options**

| **MCS index** | **Modulation and coding scheme** | **Number of PRBs** | **TB size** |
|---|---|---|---|
| **6** | **QPSK, target bit rate 0.365397133** | **1** | **328** |
| **7** | **QPSK, target bit rate 0.4280599** | **3** | **328** |
| **10** | **QPSK, target bit rate 0.615** | **2** | **328** |

**Table 2. UL dynamic scheduling resource options**

| **MCS index** | **Modulation and coding scheme, target bit rate** | **TB size / Number of PRBs** |
|---|---|---|
| **0** | **QPSK, 0.09765625** | **16/1, 32/2, 56/3** |
| **1** | **QPSK, 0.127766925** | **24/1, 56/2, 88/3** |
| **2** | **QPSK, 0.1570638** | **32/1, 72/2, 144/3** |
| **3** | **QPSK, 0.204264325** | **40/1, 104/2, 176/3** |
| **4** | **QPSK, 0.250651042** | **56/1, 120/2, 208/3** |
| **5** | **QPSK, 0.308430992** | **72/1, 144/2, 224/3** |
| **6** | **QPSK, 0.365397133** | **328/1, 176/2, 256/3** |
| **7** | **QPSK, 0.4280599** | **104/1, 224/2, 328/3** |
| **8** | **QPSK, 0.489166667** | **120/1, 256/2, 392/3** |
| **9** | **QPSK, 0.5525** | **136/1, 296/2, 456/3** |
| **10** | **QPSK, 0.615** | **144/1, 328/2, 504/3** |

The implementation process of determining an HARQ mode has been known from the foregoing description, and this process is generally performed by a network-side apparatus, so an internal structure and functions of the apparatus will be introduced below.

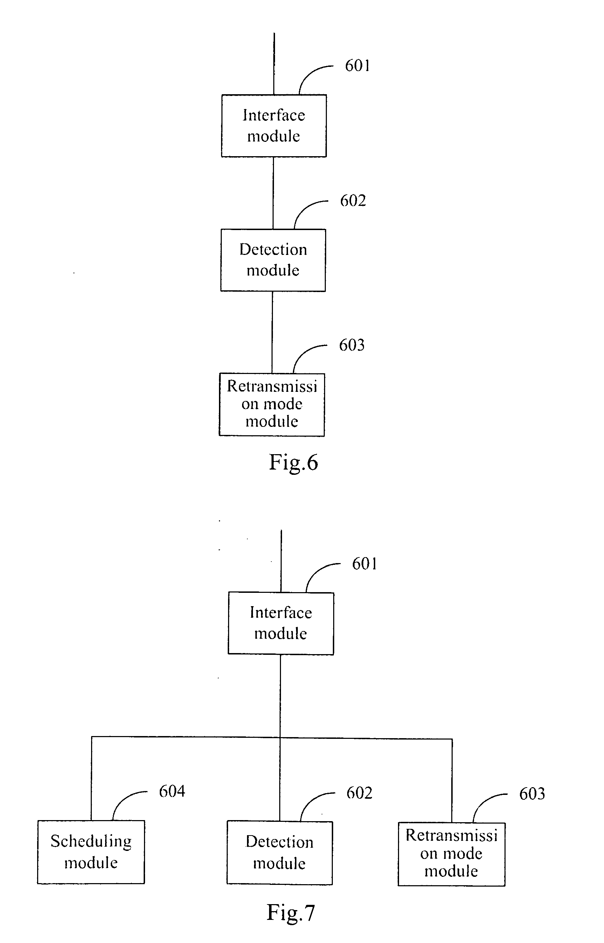

Referring to Fig.6, an apparatus for determining an HARQ mode in this embodiment includes an interface module 601, a detection module 602 and a retransmission mode module 603. The apparatus can be a NodeB (e.g., an evolved NodeB (eNB), etc.) and other apparatus capable of TTI scheduling.

The interface module 601 connected with the UE side is configured to transmit and receive various messages, for example, to transmit a reconfiguration message to instruct the UE to be reconfigured as a TTI bundling HARQ mode. The reconfiguration message includes RRC layer signaling carrying a parameter indicating activation of a TTI bundling mechanism.

The detection module 602 is configured to detect activation, upon reception of a feedback of the UE for the reconfiguration message, to determine whether the TTI bundling mechanism is validated at the UE side. Specifically the detection module 602 detects whether PUSCH data of the UE is consecutively received in a number k of consecutive sub-frames, and if PUSCH data of the UE is not consecutively received, then the detection module determines that the TTI bundling mechanism is not validated at the UE side; otherwise, the detection module determines that the TTI bundling mechanism is validated at the UE side, where k is a preset number of sub-frames. Preferably the detection module 602 detects activation after waiting for a number m of sub-frames after receiving the feedback of the UE for the reconfiguration message, where m is a preset number of sub-frames.

The retransmission mode module 603 is configured to determine from a detection result an HARQ mode adopted by the UE.

The apparatus further includes a scheduling module 604 as illustrated in Fig.7. The scheduling module 604 is configured to determine whether to schedule the TTI bundling mechanism. The interface module 601 sends the reconfiguration message when it is determined that the TTI bundling mechanism is required to be scheduled, that is, the scheduling module 604 is configured to determine that the TTI bundling mechanism is required to be scheduled before the reconfiguration message is sent.

The scheduling module 604 determines whether to schedule the TTI bundling mechanism at least against one of the following conditions: it is determined whether a channel quality of the UE satisfies a preset channel condition, and it is determined that the channel quality is poor and the TTI bundling mechanism is required to be scheduled when the channel condition is not satisfied, that is, it is determined that the channel quality of the UE is poor and the TTI bundling mechanism is required to be scheduled when the channel quality does not satisfy the preset channel condition; and it is determined whether a service type carried by the UE belongs to preset low-delay service types, and it is determined that the TTI bundling mechanism is required to be scheduled when the service type belongs to the preset low-delay service types, that is, it is determined that the TTI bundling mechanism is required to be scheduled when the service type carried by the UE belongs to the preset low-delay service types.

The detection module 602 is further configured to continue with activation detection, upon determining that the TTI bundling mechanism is not validated at the UE side, to determine whether the TTI bundling mechanism is validated at the UE side. The retransmission mode module 603 performs a TTI bundling HARQ procedure upon determining, from a determination result, that the TTI bundling HARQ mode is adopted by the UE. The retransmission mode module 603 transmits again a reconfiguration message upon determining, from the determination result, that a normal TTI HARQ mode is adopted by the UE.

In the embodiments of the invention, whether a TTI bundling mechanism is validated at the UE side, that is, whether a TTI bundling HARQ mode has been adopted by the UE, is detected upon reception of a feedback from a UE for a reconfiguration message, and if so, then it is determined that the TTI bundling HARQ mode is adopted by the UE; otherwise, it is determined that a normal HARQ mode is adopted by the UE. Determination of the HARQ mode adopted by the UE facilitates the use of the same HARQ mode at the network side as the UE to thereby address a problem arising from different retransmission modes possibly used at the network side and the UE. In the embodiments of the invention, a particular detection scheme is provided, and in view of a period of time it takes for the NodeB to parse the feedback of the UE side for the reconfiguration message, detection is performed after waiting for a number m of sub-frames to thereby improve the accuracy of detection. And detection is continued with upon determining that TTI bundling is not activated by the UE after detecting PUSCH activation once, and a reconfiguration message is retransmitted or a TTI bundling HARQ procedure is performed in response to a detection result, thus facilitating the performance of the TTI bundling HARQ procedure at both the network side and the UE side.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Evidently those skilled in the art can make various modifications and variations to the invention without departing from the scope of the invention. Thus the invention is also intended to encompass these modifications and variations thereto so long as the modifications and variations come into the scope of the claims appended to the invention and their equivalents.

## Claims

1. A method for determining an HARQ mode, comprising:
transmitting a reconfiguration message to instruct a User Equipment (UE) to be reconfigured as a Transmission Time Interval (TTI) bundling Hybrid Automatic Repeat Request (HARQ) mode;
detecting activation, upon reception of a feedback of the UE for the reconfiguration message, to determine whether a TTI bundling mechanism is validated by the UE; and
determining from a detection result an HARQ mode adopted by the UE.

2. The method according to claim 1, wherein the method further comprises: determining that the TTI bundling mechanism is required to be scheduled before sending the reconfiguration message.

3. The method according to claim 2, wherein determining that the TTI bundling mechanism is required to be scheduled further comprises:
determining that a channel quality of the UE is poor and the TTI bundling mechanism is required to be scheduled when the channel quality does not satisfy a preset channel condition; and/or
determining that the TTI bundling mechanism is required to be scheduled when a service type carried by the UE belongs to preset low-delay service types.

4. The method according to claim 1, wherein the reconfiguration message comprises RRC layer signaling carrying a parameter indicating activation of the TTI bundling mechanism.

5. The method according to claim 1, wherein detecting activation comprises: detecting whether Physical Uplink Shared Channel (PUSCH) data of the UE is consecutively received in a number k of consecutive sub-frames, and if PUSCH data of the UE is not consecutively received, then determining that the TTI bundling mechanism is not validated by the UE; otherwise, determining that the TTI bundling mechanism is validated by the UE, wherein k is a preset number of sub-frames.

6. The method according to claim 5, wherein the method further comprises: continuing with activation detection, upon determining that the TTI bundling mechanism is not validated by the UE, to determine whether the TTI bundling mechanism is validated by the UE; and performing a TTI bundling HARQ procedure upon determining, from a determination result, that the TTI bundling HARQ mode is adopted by the UE, and transmitting again the reconfiguration message upon determining, from the determination result, that a normal TTI HARQ mode is adopted by the UE.

7. The method according to any one of claims 1 to 6, wherein the method further comprises: detecting activation after waiting for a number m of sub-frames after receiving the feedback of the UE for the reconfiguration message, wherein m is a preset number of sub-frames.

8. An apparatus for determining an HARQ mode, comprising:
an interface module configured to transmit a reconfiguration message to instruct a UE to be reconfigured as a TTI bundling HARQ mode;
a detection module configured to detect activation, upon reception of a feedback of the UE for the reconfiguration message, to determine whether a TTI bundling mechanism is validated by the UE; and
a retransmission mode module configured to determine from a detection result an HARQ mode adopted by the UE.

9. The apparatus according to claim 8, wherein the apparatus further comprises a scheduling module configured to determine that the TTI bundling mechanism is required to be scheduled before the reconfiguration message is sent.

10. The apparatus according to claim 9, wherein the scheduling module further determines that the TTI bundling mechanism is required to be scheduled by:
determining that a channel quality of the UE is poor and the TTI bundling mechanism is required to be scheduled when the channel quality does not satisfy a preset channel condition; and/or
determining that the TTI bundling mechanism is required to be scheduled when a service type carried by the UE belongs to preset low-delay service types.

11. The apparatus according to claim 8, wherein the reconfiguration message comprises RRC layer signaling carrying a parameter indicating activation of the TTI bundling mechanism.

12. The apparatus according to claim 8, wherein the detection module detects whether PUSCH data of the UE is consecutively received in a number k of consecutive sub-frames, and if PUSCH data of the UE is not consecutively received, then the detection module determines that the TTI bundling mechanism is not validated by the UE; otherwise, the detection module determines that the TTI bundling mechanism is validated by the UE, wherein k is a preset number of sub-frames.

13. The apparatus according to claim 12, wherein the detection module is further configured to continue with activation detection, upon determining that the TTI bundling mechanism is not validated by the UE, to determine whether the TTI bundling mechanism is validated by the UE; and
the retransmission mode module performs a TTI bundling HARQ procedure upon determining, from a determination result, that the TTI bundling HARQ mode is adopted by the UE; and the retransmission mode module transmits again a reconfiguration message upon determining, from the determination result, that a normal TTI HARQ mode is adopted by the UE.

14. The apparatus according to any one of claims 8 to 13, wherein the detection module detects activation after waiting for a number m of sub-frames after receiving the feedback of the UE for the reconfiguration message, wherein m is a preset number of sub-frames.
